# EUROPÄISCHE PATENTSCHRIFT

(11) **EP 0 508 100 B1**
(45) Veröffentlichungstag und Bekanntmachung des Hinweises auf die Patenterteilung: **22.05.1996**
(21) Anmeldenummer: 92103717.2
(22) Anmeldetag: 05.03.1992
(51) Int. Cl.: G06K 7/10, G06K 19/07

(54) **Datenträgerkarte mit kontaktloser Schnittstelle**
Record carrier with contactless interface
Carte portant des données avec une interface sans contact

(30) Priorität: 08.03.1991 DE 4107452
(43) Veröffentlichungstag der Anmeldung: 14.10.1992
(73) Patentinhaber: Orga-Kartensysteme GmbH, D-33104 Paderborn (DE)
(72) Erfinder: Blome, Rainer, W-4790 Paderborn-Elsen (DE)
(74) Vertreter: Hanewinkel, Lorenz, Dipl.-Phys.

(56) Entgegenhaltungen:
- EP-A- 0 166 087
- DE-A- 3 047 322
- US-A- 4 916 296

## Beschreibung

Die Erfindung betrifft eine Datenträgerkarte mit einem Mikroprozessorchip, mit einem Datenspeicher, mit einer kontaktlosen Chip-Stromversorgung, mit einer kontaktlosen Dateneingabeschnittstelle zur Aufnahme von Daten von einem externen Prozessor, und mit einer kontaktlosen Datenausgabeschnittstelle, über die Daten dem externen Prozessor zuführbar sind, und in der ein von dem Mikroprozessorchip elektrisch spannungsgesteuerter Lichtmodulator so angeordnet ist, daß dieser einen von außen auftreffenden Lichtstrahl abhängig von den im Datenspeicher befindlichen Daten moduliert, welche von einem Photosensor im externen Prozessor detektierbar sind.

Aus der DE 30 47 322 A1 ist eine derartige, kontaktlos betreibbare Datenträgerkarte mit einem Mikroprozessor und einem elektronischen Datenspeicher darin bekannt, die zur Spannungsversorgung der elektronischen Schaltkreise mit einer Solarzelle versehen ist, die von einer externen Lichtquelle beleuchtet wird, sobald die Datenträgerkarte in Funktion ist. Im praktischen Betrieb wird die Datenträgerkarte in eine Vorrichtung eingebracht, die die Versorgungslichtquelle und die zu den Schnittstellenmitteln auf der Datenträgerkarte komplementären Schnittstellenmittel enthält. Die Dateneingangsschnittstelle wird vorteilhaft gleichfalls durch die Solarzelle gebildet, wozu die Lichtquelle über einen Modulator mit den zu übertragenden Daten moduliert beaufschlagt wird. Weiterhin ist zur Datenübernahme aus dem Datenspeicher der Datenträgerkarte auf dieser eine Flüssigkristallzelle angeordnet, die mit den auszugebenden Daten gemäß mit unterschiedlichen Spannungen beaufschlagt wird. Der jeweilige Reflektionsgrad der Zelle wird durch den externen Modulationsdetektor festgestellt. Eine derartige Flüssigkristallzelle benötigt eine relativ hohe Betriebsspannung, die nur durch eine Solarzellenbatterie zu erzeugen ist. Außerdem ist die Zelle aufwendig in der Herstellung und sehr empfindlich gegen hohe und niedrige Temperaturen.

Auch sind kontaktlos betreibbare Datenträgerkarten bekannt, bei denen eine induktive Schleife in die Karte eingebracht ist, welche als Transformatorwicklung für die Übertragung einer Versorgungsspannung und für die Dateneingabe und Datenausgabe als Datenübertragungsschnittstelle vorgesehen ist. Eine derartige induktive Versorgung der elektronischen Schaltung hat den Nachteil, daß besondere Gleichrichter und Siebmittel vorzusehen sind, die dem Mikroprozessorschaltkreis zugeordnet in die Datenträgerkarte eingebracht werden müssen. Weiterhin ist von Nachteil, daß die induktive Datenausgabe einen erheblichen Strombedarf hat.

Es ist Aufgabe der Erfindung eine Datenträgerkarte der eingangs genannten Art derart zu verbessern, daß ihr Lichtmodulator eine einfachere Stromversorgung aufweist, er einfacher herstellbar und robuster im Gebrauch ist.

Diese Aufgabe wird durch die im kennzeichnenden Teil des Patentanspruchs 1 angegebenen Merkmale gelöst.

Ein verstellbarer Körper, der in zwei Stellungen verbringbar ist, läßt sich durch verschiedene vorteilhafte Ausführungen verwirklichen, wobei jedoch stets der Körper in einen Kondensator eingebracht ist, der zur Umsteuerung mit einer unterschiedlichen Spannung beaufschlagt wird, so daß lediglich ein geringer Verschiebestrom jeweils bei einer Umladung und der nachfolgenden mechanischen Umstellung des Körpers fließt.

Der verstellbare Körper kann außerordentlich klein und leicht ausgebildet sein, da die optische Abtastung seiner beiden Stellungen praktisch keine Kraft benötigt. Es ist lediglich erforderlich, ein derartig starkes elektrisches Feld in einem kleinen Luftspalt aufzubauen, daß die Biegekräfte oder Lagekräfte des Körpers überwunden werden.

Als Biegelement ist eine dünne metallische Folie vorgesehen, die als Kondensatorbeleg unmittelbar dienen kann, oder ein bekannter piezoelektrischer Biegekörper geeignet, der aus einem Piezokristall besteht, der beidseitig mit den Kondensatorbelegen beschichtet ist.

Weiterhin kann als Lichtmodulator ein Dielektrikum in einem elektrischen Feld eines Kondensators bewegt werden, wobei bevorzugt in dem Kondensator zusätzlich ein Elektret angeordnet ist, der ein statisches elektrisches Feld vorhält. Der dielektrische Körper, der beweglich angeordnet ist, kann auch selbst als ein Elektret ausgebildet sein, so daß er je nach der jeweiligen Polarisierung des es umgebenden Kondensatorfeldes sich unterschiedlich orientiert einstellt.

Die Datenträgerkarte ist zumindest in dem Bereich des verstellbaren Körpers, dort wo dessen Stellung optisch abzutasten ist, mit einer transparenten Abdeckung einseitig oder beidseitig abgedeckt. Die einseitige Abdeckung ist dann vorgesehen, wenn die verschiedenen Stellungen des verstellbaren Körpers reflektiv beobachtet werden. Die beidseitige transparente Abdeckung ist dann vorgesehen, wenn der gesteuerte Körper der Abschattung eines hindurchgeführten Lichtstrahles dient.

Der verstellbare Körper kann unmittelbar auf dem elektronischen Schaltkreis befestigt sein oder auch seitlich an diesem angeordnet sein. Dabei kann zumindest eine der Elektroden sich auf dem elektronischen Schaltkreis unmittelbar erstrecken, und die andere Elektrode ist an dem verstellbaren Körper ausgebildet und an dem elektronischen Schaltkreis kontaktiert.

Für die Datenausgabe kann die gleiche Lichtquelle, die der Stromversorgung und der Dateneingabe dient, dazu benutzt werden, den verstellbaren Körper zu beleuchten. Für die Aufnahme der reflektierten Strahlung oder der transmittierten Strahlung sind in der externen Schnittstellenvorrichtung Fotozellen angeordnet, deren Signale geeignet gefiltert und aufbereitet als digitale Zustandssignale an einen externen Prozessor geführt werden.

Um einen möglichst hohen Kontrast zu erreichen, wenn ein sehr kleiner verstellbarer Körper nur eine geringe Bewegung ausführt, ist es vorgesehen, diesen reflektiv verspiegelt zu gestalten oder für eine Abschattung mit einer Absorbtionsschicht zu versehen. Der Kontrast kann noch weiter erhöht werden, indem gitterartige Streifen auf und vor dem Körper vorgesehen sind, so daß bei einer Überdeckung der Streifen mit den Lücken in einem Fall und im anderen Fall bei einer Überdeckung der Lücken selbst jeweils das einfallende Licht helligkeitsgesteuert hindurchtritt, wobei nur eine Bewegung von der halben Gittermaschenweite ausreicht, um den vollen Helligkeitsunterschied zu erreichen.

Für die Detektion des reflektierten Lichtes in zwei verschiedenen Stellungen des Reflektors sind besonders vorteilhaft jeweils zwei Fotodetektoren vorgesehen, die auf die jeweilige reflektierte Strahlung in den beiden Stellungen ausgerichtet sind. Die Ausgangssignale der beiden Fotozellen werden vorteilhaft differentiell verstärkt, so daß eine Stellungsumschaltung auch bei einem hohen Anteil von Streulicht aus der Umgebung eindeutig möglich ist.

Vorteilhafte Ausgestaltungen sind in den Figuren 1 bis 4 dargestellt.
- Fig. 1: zeigt eine Datenträgerkarte in einer Bearbeitungsvorrichtung schematisch;
- Fig. 2: zeigt einen vergrößerten Querschnitt mit einem Biegereflektor;
- Fig. 3: zeigt einen vergrößerten Querschnitt eines Piezoelementes;
- Fig. 4: zeigt einen vergrößerten Querschnitt eines dielektrischen Reflektors.

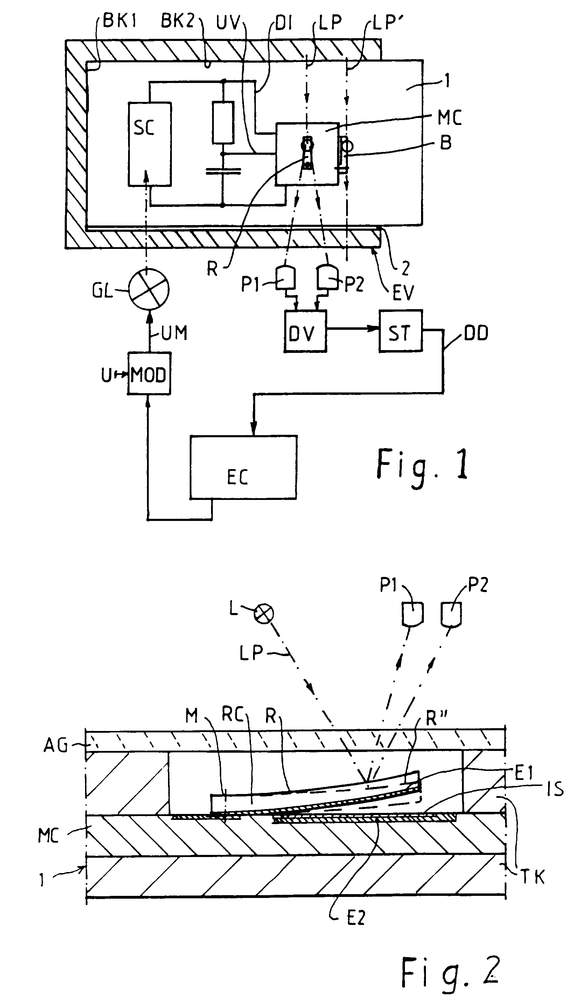

Figur 1 zeigt eine Datenträgerkarte (1), die in einen Spalt (2) einer geschnitten gezeichneten Aufnahmevorrichtung (EV) eingesetzt ist, wobei sie mit den Bezugskanten (BK1, BK2) in ihrer Lage definiert gehalten ist. Hierdurch ist es möglich, die Schnittstellenelemente auf der Datenträgerkarte (1) und in der Aufnahmevorrichtung (EV) zueinander richtig zu positionieren, so daß sie in Datenaustausch treten können. Die Daten sind in der Datenträgerkarte in dem Mikroprozessorchip (MC) gespeichert, der in die Karte in bekannter Weise eingesetzt ist. Zur Stromversorgung dieses Mikroprozessorchips (MC) dient eine Solarzelle (SC), die von einer externen Lichtquelle (GL) beaufschlagt ist, und deren fotovoltaische Spannung (UV) dem Mikroprozessor zugeführt ist.

Zur Dateneingabe und insbes. zur Eingabe von Steuersignalen ist es vorgesehen, daß der externe Prozessor (EC) ein Steuersignal einem Modulator (MOD) zuführt, der die Versorgungsspannung (U) in Form einer Frequenz- oder Phasenmodulation moduliert. Die entstehende Modulatorspannung (UM) beaufschlagt die Lichtquelle (GL) die vorzugsweise aus einer Gasentladungslampe besteht. Auf diese Weise ist auch die fotovoltaische Spannung der Solarzelle (SC) moduliert, und diese ist an die Dateneingabeschnittstelle (DI) des Mikroprozessorchips (MC) angeschlossen.

Für die Datenausgabe ist der verstellbare Körper mit dem Reflektor (R) vorgesehen, welcher auf dem Mikroprozessorchip (MC) unmittelbar aufgebracht ist. Der Lichtstrahl (LP) ist unmittelbar auf den Reflektor (R, R') gerichtet und wird von diesem, je nach dessen Stellung, der einen oder anderen von zwei Fotozellen (P1, P2) zugeführt. Die Fotozellen (P1, P2) sind an die beiden Eingänge eines Differentialverstärkers (DV) geführt, dessen Ausgangssignale in einem Schmittrigger (ST) in ein digitales Signal verwandelt werden, welches als Detektorsignal (DD) dem externen Prozessor (EC) zugeführt ist. Auf diese Weise werden die von dem Mikroprozessorchip (MC) auszugebenden Daten als Steuerimpulse dem Kondensator des verstellbaren Körpers zugeführt, und dieser bringt die Daten als modulierte Lichtsignale zu den Fotosensoren (P1, P2), deren Signale elektrisch aufbereitet dann der Schnittstelle des externen Prozessors (EC) zugeführt sind.

Das Licht der Solarzelle kann auch zur Beleuchtung des Reflektors (R) genutzt werden, für den auch eine weitere Lichtquelle vorgesehen sein kann. An Stelle des Reflektors (R) kann auch ein piezoelektrisches Element als Steuermittel dienen. Beispielsweise ist ein piezoelektrisches Biegeelement (B) stirnseitig des Mikroprozessors angeordnet. Der Lichtstrahl (LP') ist an diesem Biegeelement (B) vorbeigeführt und tritt an der anderen Seite der Datenträgerkarte (1) wieder aus, oder er ist von dem abgebogenen Biegeelement (B) abgeschattet, was durch eine Fotozelle (nicht dargestellt) zu ermitteln ist. Die gezeigten Lichtwege sind senkrecht zur Bildebene vorgesehen und hier nur schematisch dargestellt.

Figur 2 zeigt einen vergrößerten Querschnitt durch eine Datenträgerkarte (1). Auf dem Grundträger (TK) ist der Mikroprozessorchip (MC) aufgebracht. Dessen Schaltkreis führt zu den Kondensatorelektroden (E1, E2) eines Kondensators, von denen die eine zur Vermeidung eines Kurzschlusses mit einer Isolierschicht (IS) abgedeckt ist. Die andere Kondensatorelektrode (E1) ist an einem Biegeelement (RC) angeordnet, welches einseitig mit einer Befestigung (M) an dem Mikroprozessorchip (MC) angebracht ist. Auf dem Biegeelement (RC) ist eine optische Reflektorschicht (R) aufgebracht. Abhängig von der elektrischen Spannung zwischen den beiden Kondensatorelektroden (E1, E2) ist das Biegeelement (RC) verschieden stark elektrostastisch angezogen, so daß es bei erhöhter Spannung so weit durchgebogen ist, daß sein Reflektor (R2') einen einfallenden Lichtstrahl (LP) einer Lichtquelle (L) zu einem Fotosensor (P2) anstatt zu einem Fotosensor (P1) ablenkt, wohin es in der Ausgangsstellung abgelenkt ist. Das Biegeelement (RC) arbeitet somit nach Art eines Elektrometers.

Oberhalb des Biegeelementes ist eine transparente Abdeckung (AG) angeordnet, die einen Schutz des Elementes erbringt, jedoch die lichtelektrische Abtastung nicht behindert.

Der Biegekörper (RC) kann auch aus einem reflektierenden Metallstreifen bestehen, der gleichzeitig selbst die Elektrode (E1) bildet und die Biegefunktion durch geeignete Elastizität erbringt.

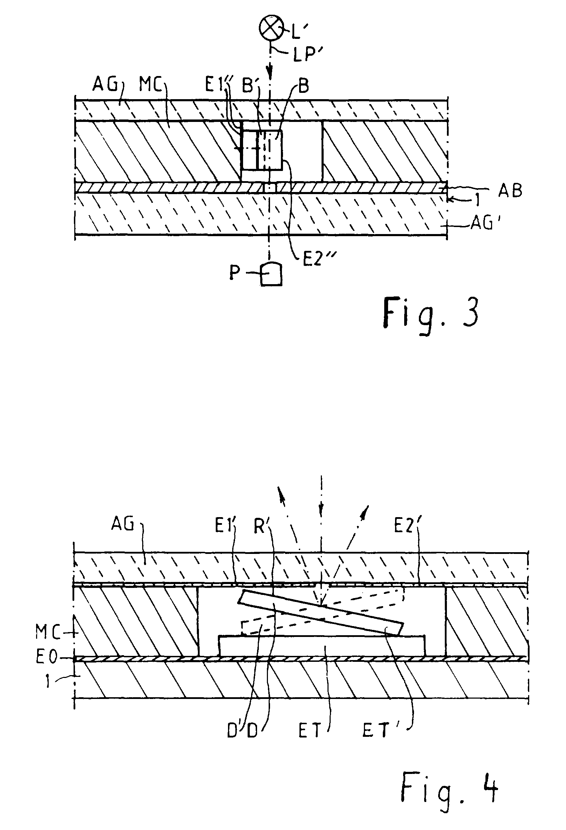

Figur 3 zeigt einen vergrößerten Querschnitt einer Datenträgerkarte, in der ein Mikroprozessorchip (MC) zwischen zwei transparenten Schutzschichten (AG, AG') eingelagert ist. Zwischen den Mikroprozessor und der einen Schutzschicht (AG') ist eine lichtabsorbierende Zwischenlage (AB) eingebracht, die eine enge Lichtpassage aufweist, so daß der Lichtstrahl (LP') einer Lichtquelle (L') die Karte dort passieren kann und so von einem Fotosensor (P) detektierbar ist. Von dem Mikroprozessorchip (MC) gehen elektrische Anschlüsse zu den Kondensatorelektroden (E1'', E2'') die beidseitig eines piezoelektrischen Biegeleementes (B) in bekannter Weise aufgebracht sind. Dieses piezoelektrische Element (B) ist seitlich an den Mikroprozessorchip (MC) angebracht. Abhängig von der Spannungsbeaufschlagung der Elektroden (E1'', E2'') ist es in eine Stellung (B') oder in eine weitere Stellung (B) verbracht, wodurch der Lichtstrahl (LP') im einen Fall passieren kann und im anderen Fall abgeschattet ist. Da das piezoelektrische Element (B) sehr kleine Abmessungen hat, genügen auch geringe Spannungen um es in der gewünschten Weise ausreichend zu verformen.

Ein weiteres Beispiel eines elektrostatisch gesteuerten einstellbaren Körpers zeigt Figur 4. Auf der Datenträgerkarte (1) ist auf einer Grundelektrode (E0) der Mikroprozessorchip (MC) aufgebracht, von dem zwei elektrisch gesteuerte Elektroden (E1', E2') sich nebeneinander, gegenüberliegend der Grundelektrode (E0) erstrecken. In dem Zwischenraum zwischen den Elektroden (E1', E2', E0) ist ein dielektrischer Körper (D) frei beweglich eingebracht. Außerdem ist dort ein Elektret (ET) eingebracht, dessen elektrisches Feld das Dielektrikum anzieht und abhängig von der Spannungsverteilung zwischen den Elektroden (E1', E2') unterschiedlich ausrichtet. Der dielektrische Körper (D, D') ist mit einem Reflektor (R') oberflächlich versehen, so daß er einfallendes Licht abhängig von seiner Stellung in verschiedenen Richtungen reflektiert. Oberhalb des dielektrischen Körpers (D) ist die Datenträgerkarte mit einer transparenten Abdeckung (AG) versehen, und auch die Elektroden (E1', E2') sind als transparente Metallisierungen auf dieser Abdeckung (AG) angebracht. Auf diese Weise kann das einfallende und reflektierte Licht dort ungehindert passieren. Die Detektorvorrichtung ist zweckmäßig zu derjenigen in Fig. 2 analog aufgebaut.

Die verschiedenen gezeigten Ausgestaltungen sind beispielhaft, und können durch unterschiedliche Kombinationen der Beispiele abgewandelt werden. So können die unterschiedlichen Biegeelemente und der frei bewegliche Körper sowohl oberhalb als auch seitlich von dem Mikroprozessorchip angeordnet werden, und die verschiedenen Körper eignen sich sowohl für die reflektierende als auch die transmittierende optische Abtastung. Auch läßt sich ein Elektret in Verbindung mit einem Biegeelement einsetzen, und auch das Biegeelement selbst oder der freibewegliche dielektrische Körper selbst können ein Elektret sein.

## Patentansprüche

1. Datenträgerkarte (1) mit einem Mikroprozessorchip (MC), mit einem Datenspeicher, mit einer kontaktlosen Chip-Stromversorgung (SC), mit einer kontaktlosen Dateneingabeschnittstelle (DI) zur Aufnahme von Daten von einem externen Prozessor (EC), und mit einer kontaktlosen Datenausgabeschnittstelle, über die Daten dem externen Prozessor (EC) zuführbar sind, und in der ein von dem Mikroprozessorchip (MC) elektrisch spannungsgesteuerter Lichtmodulator (R, D, B) so angeordnet ist, daß dieser einen von außen auftreffenden Lichtstrahl (LP, LP') abhängig von den im Datenspeicher befindlichen Daten moduliert, welche von einem Photosensor (P, P1, P2) im externen Prozessor (EC) detektierbar sind,
dadurch gekennzeichnet, daß der Lichtmodulator (R, D, B) aus einem datenabhängig spannungsgesteuerten Kondensator (E1, E2; E1', C2'; E1", E2") besteht, in dessen elektrischem Feld ein mechanisch zwischen zwei Lagen verstellbarer,
lichtreflektierender oder lichtabsorbierender Körper angeordnet ist, und daß die jeweilige Lage des Körpers der Modulation durch die Daten entspricht.

2. Datenträgerkarte nach Anspruch 1, dadurch gekennzeichnet, daß der gesteuert verstellbare Körper ein einseitig befestigter, biegsamer Kondensatorbeleg (E1) ist, dessen äußere Oberfläche ein Reflektor (R) oder ein Lichtabsorber ist.

3. Datenträgerkarte nach Anspruch 1, dadurch gekennzeichnet, daß der gesteuert verstellbare Körper ein seitlich gehaltener piezoelektrischer Biegekörper (B) ist, der ganz oder partiell lichtreflektierend oder lichtabsorbierend ist.

4. Datenträgerkarte nach einem der Ansprüche 1 bis 3, dadurch gekennzeichnet, daß der gesteuert verstellbare Körper auf der Oberfläche oder an einer Seitenfläche des Mikroprozessorchips (MC) befestigt ist.

5. Datenträgerkarte nach Anspruch 1, dadurch gekennzeichnet, daß der gesteuert verstellbare Körper ein zwischen den zwei Kondensatorelektroden (E1', E2') frei beweglich gelagerter dieelektrischer Körper (D) ist.

6. Datenträgerkarte nach einem der vorstehenden Ansprüche, dadurch gekennzeichnet, daß mindestens eine der Kondensatorelektroden (E1) auf eine isolierende transparente Abdeckung (AG) transparent aufgedampft ist.

7. Datenträgerkarte nach einem der Ansprüche 1 bis 6, dadurch gekennzeichnet, daß der verstellbare Körper sich in einem elektrischen Feld eines Elektreten (ET) befindet.

8. Datenträgerkarte nach Anspruch 5 oder 6, dadurch gekennzeichnet, daß der dielektrische Körper (D) ein Elektret (ET') ist.

9. Datenträgerkarte nach einem der vorstehenden Ansprüche, dadurch gekennzeichnet, daß sie zumindest im Bereich des verstellbaren Körpers ein- oder beidseitig mit einer transparenten Schutzschicht (TS) abgedeckt ist.

10. Datenträgerkarte nach einem der vorstehenden Ansprüche, dadurch gekennzeichnet, daß der verstellbare Körper jeweils einen bestimmten Abstand zu zwei Bezugskanten (BK1, BK2) der Datenträgerkarte (1) hat.

11. Vorrichtung zur Datenübertragung von einer Datenträgerkarte (1) gemäß einem der Ansprüche 1 bis 10 zu einem externen Prozessor (EC), wobei die Vorrichtung eine Aufnahmevorrichtung (EV) für die Datenträgerkarte (1) umfaßt, und in der Vorrichtung auf einer Seite der Datenträgerkarte (1) mindestens eine Lichtquelle (L, L', GL) angeordnet ist, die den Lichtmodulator (R, B, D) bestrahlt, in dessen moduliertem Lichtstrahl (LP1, LP1') sich ein lichtelektrischer Sensor (P1) befindet, dadurch gekennzeichnet, daß sich ein zweiter lichtelektrischer Sensor (P2) in dem Lichtstrahl (LP1, LP2) befindet, und die zwei Sensorsignale der zwei Sensoren (P1, P2) in einem Differentialverstärker (DV) verstärkt werden, dessen Ausgangssignal über einen Schmittrigger (ST) als ein Detektorsignal (DD) dem externen Prozessor (EC) zugeführt wird.

## Claims

1. Data medium card (1) having a microprocessor chip (MC), a data store, a contactless chip current supply (SC), a contactless data input interface (DI) for receiving data from an external processor (EC), and a contactless data output interface via which data can be sent to the external processor (EC) and in which a light modulator (R, D, B) whose voltage is electrically controlled by the microprocessor chip (MC) is so arranged that the said light modulator modulates a light ray (LP, LP') incident from outside in dependence on the data in the data store, which are able to be detected by a photosensor (P, P1, P2) in the external processor (EC), characterised in that the light modulator (R, D, B) consists of a data-dependently voltage-controlled capacitor (E1, E2; E1', E2'; E1", E2") in the electric field of which is arranged a light-reflecting or light-absorbing body adapted to be adjusted mechanically between two positions, and that the respective position of the body corresponds to the modulation by the data.

2. Data medium card according to claim 1, characterised in that the body adapted to be adjusted in controlled manner is a flexible capacitor foil (E1) secured on one side, the outer surface of which is a reflector (R) or a light absorber.

3. Data medium card according to claim 1, characterised in that the body adapted to be adjusted in controlled manner is a piezoelectric flexural body (B) held at the side, which is totally or partly light-reflecting or light-absorbing.

4. Data medium card according to any of claims 1 to 3, characterised in that the body adapted to be adjusted in controlled manner is fastened on the surface or to a lateral face of the microprocessor chip (MC).

5. Data medium card according to claim 1, characterised in that the body adapted to be adjusted in controlled manner is a dielectric body (D) mounted so as to be freely movable between the two capacitor electrodes (E1', E2').

6. Data medium card according to any of the preceding claims, characterised in that at least one of the capacitor electrodes (E1) is transparently vacuum metallised onto an insulating transparent covering (AG).

7. Data medium card according to any of claims 1 to 6, characterised in that the adjustable body is situated in an electric field of an electret (ET).

8. Data medium card according to claim 5 or 6, characterised in that the dielectric body (D) is an electret (ET').

9. Data medium card according to any of the preceding claims, characterised in that at least in the region of the adjustable body it is covered on one or both sides with a transparent protective layer (TS).

10. Data medium card according to any of the preceding claims, characterised in that the adjustable body is in each case a certain distance from two reference edges (BK1, BK2) of the data medium card (1).

11. Device for transmitting data from a data medium card (1) according to any of claims 1 to 10 to an external processor (EC), the device comprising a locating device (EV) for the data medium card (1) and there being arranged in the device to one side of the data medium card (1) at least one light source (L, L', GL) which irradiates the light modulator (R, B, D), in the modulated light ray of which (LP1, LP1') there is a photoelectric sensor (P1), characterised in that there is a second photoelectric sensor (P2) in the light ray (LP1, LP2) and the two sensor signals from the two sensors (P1, P2) are amplified in a differential amplifier (DV), the output signal from which is sent as a detector signal (DD) to the external processor (EC) via a Schmitt trigger (ST).

## Revendications

1. Carte portant des données (1) avec un chip à microprocesseur (CM), une mémoire de données, une alimentation en courant du chip sans contact (SC), une interface d'entrée des données sans contact (DI) prévue pour l'acceptation de données en provenance d'un processeur externe (EC) et une interface de sortie des données sans contact, par l'intermédiaire de laquelle des données peuvent être conduites à un processeur externe (EC), un modulateur de lumière (R, D, B), commandé électriquement en tension par le chip à microprocesseur (MC), étant disposé de sorte qu'un rayon lumineux (LP, LP') venant de l'extérieur puisse être modulé en dépendance des données qui sont contenues dans la mémoire et peuvent être détectées par un photosenseur (P, P1, P2) dans le processeur externe (EC),
caractérisée en ce que
le modulateur de lumière (R, D, B) consiste en un condensateur (E1, E2; E1', E2'; E1", E2") commandé en tension en dépendance des données et dans le champ électrique duquel un corps réfléchissant ou absorbant la lumière est disposé étant réglable, mécaniquement, entre deux positions, et
que la position respective du corps correspond à la modulation par les données.

2. Carte portant des données selon la revendication 1,
caractérisée en ce que
le corps réglable, commandé est une armature de condensateur (E1) flexible, fixée monolatéralement dont la surface extérieure est un réflecteur (R) ou un absorbeur de lumière.

3. Carte portant des données selon la revendication 1,
caractérisée en ce que
le corps réglable par commande est un corps à flexion piézo-électrique (B), maintenu latéralement, lequel réfléchi ou absorbe la lumière partiellement ou complètement.

4. Carte portant des données selon l'une des revendications 1 à 3,
caractérisée en ce que
le corps réglable par commande est fixé sur la surface ou le côté du chip à microprocesseur (MC).

5. Carte portant des données selon la revendication 1,
caractérisée en ce que
le corps réglable par commande est un corps diélectrique (D) qui est monté, mobile librement, entre deux électrodes de condensateur (E1', E2').

6. Carte portant des données selon l'une des revendications précédentes,
caractérisée en ce que
au moins l'une des électrodes de condensateur (E1) est métallisée en transparence sur une couche protectrice transparente (AG).

7. Carte portant des données selon l'une des revendications 1 à 6,
caractérisée en ce que
le corps réglable par commande est situé dans un champ électrique d'un électrète (ET).

8. Carte portant des données selon l'une des revendications 5 ou 6,
caractérisée en ce que
le corps diélectrique (D) est un électrète (ET).

9. Carte portant des données selon l'une des revendications précédentes,
caractérisée en ce que
celle-ci est recouverte, monolatéralement ou bilatéralement, au moins dans la zone du corps réglable, d'une couche protectrice transparente (TS).

10. Carte portant des données selon l'une des revendications précédentes,
caractérisée en ce que
le corps réglable présente, respectivement, un certain intervalle par rapport aux bords de référence (BK1, BK2) de la carte portant des données (1).

11. Dispositif de transfert de données d'une carte portant des données (1) selon l'une des revendications 1 à 10 à un processeur externe (EC), ce dispositif de transfert comprenant un dispositif d'accueil (EV) pour la carte portant des données (1) et une source de lumière (L, L', GL), au moins, étant disposée sur un côté de la carte portant des données (1), laquelle source de lumière (L, L', GL) éclaire le modulateur de lumière (R, B, D) dans le rayon de lumière modulé (LP1, LP1') duquel se trouve un senseur photo-électriques (P1),
caractérisée en ce que
un deuxième senseur photo-électrique (P2) se trouve placé dans le rayon lumineux (LP1, LP2) et que les deux signaux des deux senseurs (P1, P2) sont amplifiés dans un amplificateur différentiel (DV) dont le signal de sortie est conduit au processeur externe (EC), en tant que signal détecteur (DD), par l'intermédiaire d'une bascule de Schmitt (ST).
